# EUROPEAN PATENT APPLICATION

(11) **EP 0 709 237 A2**
(43) Date of publication of application: **01.05.1996**
(21) Application number: 95202789.4
(22) Date of filing: 16.10.1995
(51) Int. Cl.: B60C 11/01, B60C 3/04, B29D 30/56

(54) **A tread for truck tires**

(30) Priority: 24.10.1994 US 327773
(71) Applicant: THE GOODYEAR TIRE & RUBBER COMPANY, Akron, Ohio 44316-0001 (US)
(72) Inventor: Hagmaier, Rodger Arland, Hudson, OH 44236 (US)
(74) Representative: Leitz, Paul

(57) **Abstract**

A precured tire tread **(10)** made of an elastomeric material and suitable for mounting on a prepared steel belted radial truck tire casing **(60)** is described. The tread **(10)** is preferably compression molded and has a ground-engaging surface **(18)** with grooves **(12)** and an inner tread of minimal thickness. The precured tread **(10)** has a tread width at a centerline **(CL)**, a center portion **(22)** and two shoulder portions **(26**, **28)**. Each of the shoulder portions has a first radius curvature R1 and second radius of curvature R2. The first radius of curvature R1 has a center located along a line **(32)** parallel to the centerline **(CL)** of the precured tread **(10)** and displaced a distance D1 therefrom. The first radius of curvature R1 is between 125% and 225% of the tread width. The distance D1 is between 10% and 25% of the tread width. The second radius of curvature R2 has a center along a line parallel to the centerline of the precured tread and displaced a distance D2 therefrom. The second radius of curvature R2 is between 5% and 25% of the tread width and the distance D2 is between 30% and 50% of the tread width. The ground-engaging surface **(18)** of the tread in the shoulder portions is displaced toward the tire's axis of rotation, thereby reducing scuffing of the tread in applications where tires are mounted on an vehicle axle which is subjected to excessive lateral forces. Excessive lateral abrasive forces could occur in any truck with more than one rear drive or idler axle. The forces are more severe, as the number of drive axles increase.

## Description

### Background of the Invention

This invention relates to a precured and preferably compression molded tread designed to be mounted on a prepared truck tire casing, either new or in the process of being retreaded.

Currently, it is economically efficient to replace the worn out truck tire tread with a replacement tread. Multi-ply truck tire casings are designed to last longer than the truck tire tread and are designed to be capable of retreading.

The truck tire casing is prepared by buffing off the worn tread. A replacement tread can be molded directly onto the tire by a procedure known in the art as "hot capping" or by an alternate method known as "conventional retreading." In the conventional retreading process, uncured rubber is layered onto the buffed casing, which in turn is placed into a mold and the layered uncured rubber is vulcanized or cured.

The hot capping process molds the tread directly onto the casing so that good surface adhesion and minimal stresses are created in the tread. The primary disadvantages of this method are the length of time necessary to cure the tread and the cost of the mold.

Alternatively, a method of "cold capping" can be used wherein a thin layer of unvulcanized rubber is placed on the buffed tire casing, and a precured replacement tread is then assembled to the tire casing and bonded to it by curing the thin layer of unvulcanized rubber. The primary advantages of cold capping with precured treads are reduced curing time and reduced tooling costs.

There are a wide variety of truck tires and of truck tire applications. One such truck tire application is that of a "spread axle" truck. A spread axle truck is one which incorporates tires on an axle known as an "idler axle." The idler axle is typically mounted at the rear of the vehicle on the axle nearest the center of the vehicle. The tires on the idler axle generally do not come in contact with the road or bear much load. Because tires mounted on the idler axle are susceptible to excessive lateral forces during turns, they are especially susceptible to premature tread wear due to "scuffing" as the tires slide against the road surface during a turn.

The present invention relates to a tread design which reduces scuffing during the turning phase and provides good overall performance.

### Related Art

**US-A- 4 792 379 (McGEE et al)**, teaches a method and apparatus for "hot cap" retreading, and more particularly, to tire recapping with flexible segmented molds.

**US-A- 3 815 651 (NEAL)**, teaches a replacement tread said to be particularly adaptable for passenger tires. The is said tread to be made by compression molding. The tread is said to include an endless premolded central tread portion with integral shoulder wings, the tread being diametrically and axially smaller than the casing to which the tread is mounted. The shoulder wing is said to extend to cover approximately the entire sidewall of the casing.

**US-A- 4 239 075 (HEDLUND)**, purportedly teaches a precured tire tread for use in retreading tires having a concave tread surface and a flat rear surface adapted to be mounted to a buffed casing. When mounted, the flat rear surface is said to conform to the contour of the casing such that the road contact surface is flat. The tread is said to be designed to be butt spliced onto the casing.

**US-A- 3 951 720 (BRODIE)**, purportedly teaches materials and methods for bonding a prevulcanized tread strip to the periphery of a tire by cold vulcanization. It purports to relate to a strip of bonding material, to methods for making the material and to methods for using the material in the bonding of the tread strip to the tire.

**US-A- 2 976 910 (NORWALK), and US-A- 3 136 673 and 3 236 709 (CARVER)**, all are said to teach the broad concept of cold bonding a prevulcanized rubber tread strip to the periphery of a tire.

**GB-A- 2 031 352 (HEDLUND)**, purportedly teaches a butt end spliced tread with a reinforcing belt.

**JP-A- 88/295243 (HIJIKATA)**, published December 1, 1988, is said to describe a flat precured tread with removable sealing plates attached at the tread shoulders.

### Summary of the Invention

An intermediate article of manufacture comprises a precured tread for heavy duty pneumatic truck tires. The precured tread has a tread width and a centerline. The tread also has a center portion and two shoulder portions. One of the shoulder portions has a first radius of curvature of R1 and second radius of curvature of R2. The first radius of curvature R1 has a center along a line parallel to the centerline of the precured tread and displays the distance of D1 therefrom. The first radius of curvature R1 is between 125% and 225% of the tread width. The distance D1 is between 10% and 25% of the tread width. The second radius of curvature R2 has a center along a line parallel to the center of the precured tread and displays the distance D2 therefrom. The second radius of curvature R2 is between 5% and 20% of the tread width and the distance D2 is between 30% and 50% of the tread width.

### Definitions

The invention also may be better understood in the context of the following definitions, which are applicable to both the specification and the appended claims.

**"Axial"** is used herein to refer to lines or directions that are parallel to the axis of rotation of the casing or wheel.

**"Buffing"** means a procedure whereby the surface of an elastomeric tread or casing is roughened. The roughening removes oxidized material and permits better bonding.

**"Cold capping"** means a procedure whereby a premolded and precured tread is bonded to a prepared tire casing.

**"Casing"** means the casing, belt structure, beads, sidewalls, and all other components of the tire excepting the tread and undertread. The casing may be new, unvulcanized rubber or previously vulcanized rubber to be fitted with a new tread.

**"Crown diameter"** means the diameter at the equatorial plane of the radially outermost surface of the tire or prepared casing.

**"Equatorial plane (EP)"** means the plane perpendicular to the axis of rotation of the casing or wheel and passing through the center of the crown area of the casing.

**"Hot capping"** means a procedure whereby a layer of unvulcanized rubber is layered onto a prepared casing and molded directly onto the casing.

**"Inner tread"** is used herein to define tread material directly radially inward of the grooves.

**"Pneumatic tire"** means a laminated mechanical device of generally toroidal shape (usually an open torus) having beads and a tread and made of rubber, chemicals, fabric and steel or other materials. When mounted on the wheel of a motor vehicle, the tire through its tread provides traction and contains the fluid or gaseous matter, usually air, that sustains the vehicle load.

**"Replacement tread"** as used herein refers to a molded and precured tread.

**"Retreading"** means the procedure of refurbishing a tread worn tire by removing the old tread and replacing it with a precured tread or a "hot capped" tread.

**"Radial" and "Radially"** are used to mean directions radially toward or away from the axis of rotation of the casing or wheel.

**"Sidewall"** means that portion of the tire between the tread and the bead.

**"Spread axle"** means a type of vehicle which has a front axle, at least one rear drive axle, and an idler axle mounted towards the rear of the vehicle between the two.

**"Tread"** means a molded rubber component which, when bonded to a tire casing, includes that portion of the tire which comes into contact with the road when the tire is normally inflated and under normal load.

**"Tread width"** means the arc length of the tread surface in the axial direction, that is in a plane passing through the axis of rotation of the tire.

### Brief Description of the Drawings

**Figure 1** illustrates a cross-sectional view of a precured truck tire tread according to the invention mounted onto a tire casing.

**Figure 2** illustrates a cross-sectional view of a prior art of a precured truck tire tread according to the prior art, mounted onto a tire casing.

**Figure 3** illustrates a perspective view of approximately 1/4 of a truck tire with a precured tread according to the invention.

**Figure 4** illustrates a perspective view of approximately 1/4 of a truck tire with a precured tread according to the prior art.

**Figure 5** illustrates an enlarged view of one half the precured truck tire tread of Figure 1.

**Figure 6** illustrates an enlarged view of one half the prior art precured truck tire tread of Figure 2.

### Detailed Description of the Invention

In the drawings, the same numerals are used to designate the same components or items in several views.

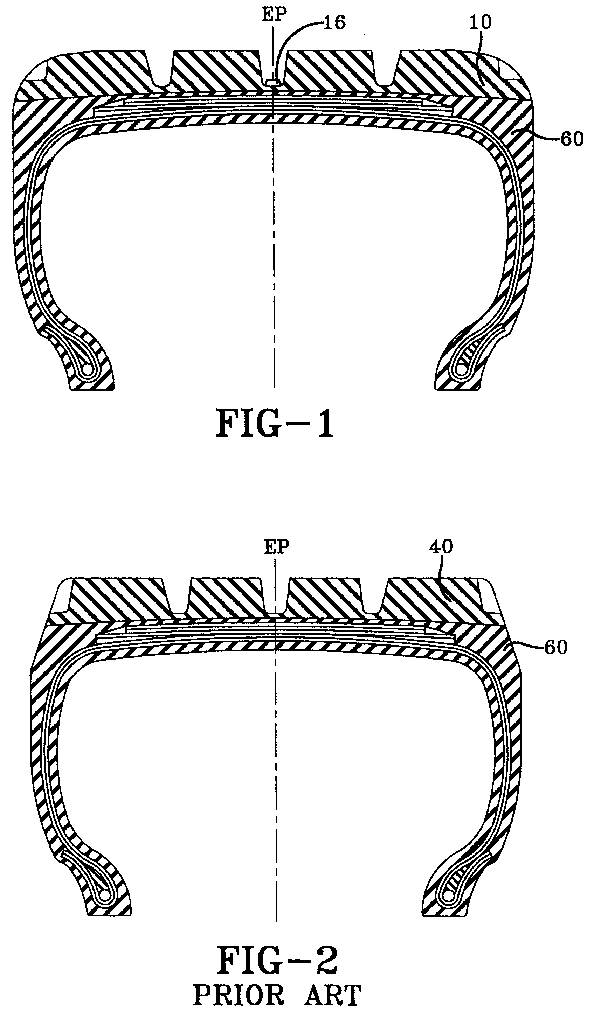

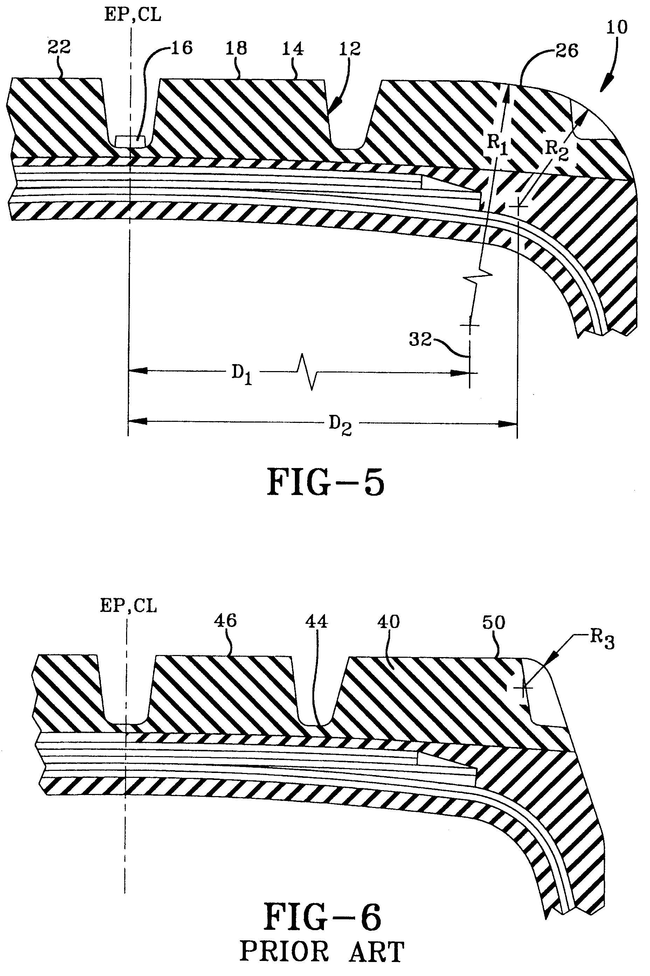

With particular reference now to Figures 1 and 5, a precured tread 10 according to the invention is illustrated. When the tread 10 is properly mounted onto a tire casing 60 the tread 10 is bisected by the tire's equatorial plane EP. When the tread 10 is not yet mounted on the tire casing 60, as illustrated in Figures 5 and 6, the centerline CL of the tread 10 is essentially analogous to the tire's equatorial plane EP. The precured tread 10 is capable of being mounted on at least one commercial size truck tire casing when the casing is prepared with a convex curvature and axial width similar to a convex curvature and axial width of the precured tread 10.

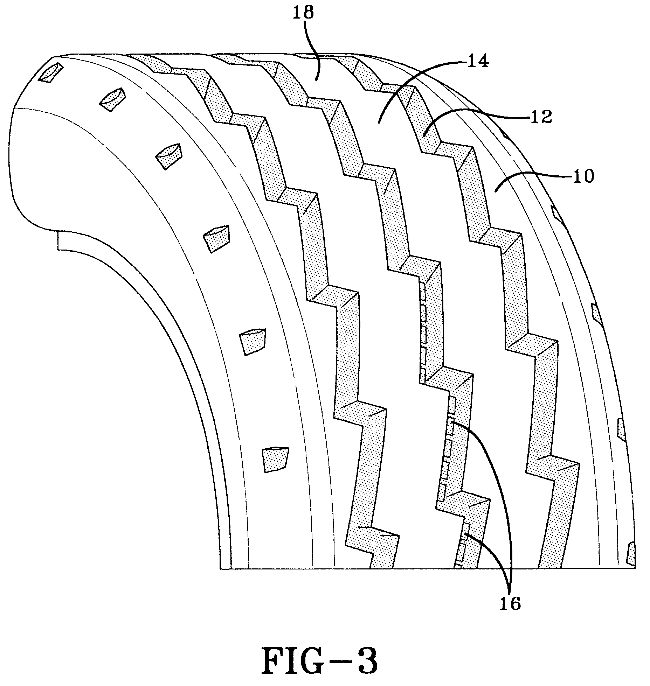

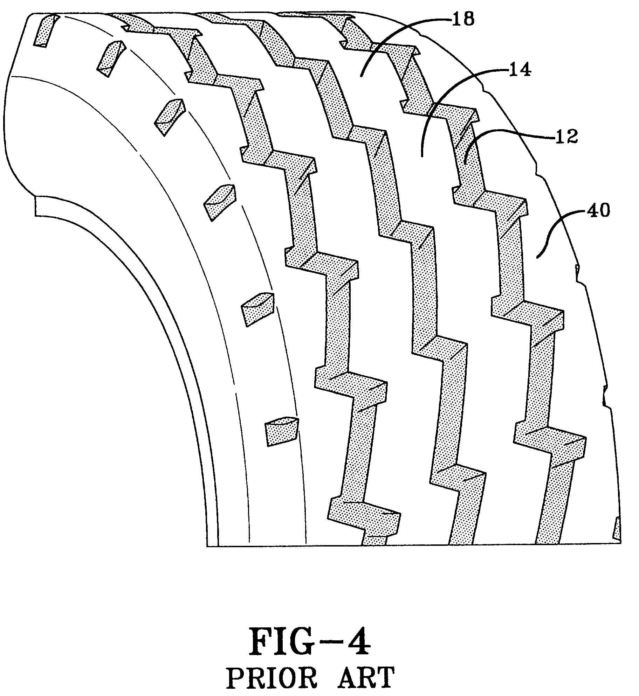

With reference to Figures 3 and 4, the inventive precured tread 10, as well as the prior art precured tread 40, usually will feature some sort of tread design comprising grooves 12 and tread lugs 14. The preferred embodiment tread 10 includes stone ejectors 16 in a groove of said precured tread 10. The present invention is not so concerned with the tread design of the grooves 12 and lugs 14 but rather with the cross-sectional profile of the ground-engaging surface 18 of the tread 10 as best illustrated in Figure 5.

The tread 10 has a center portion 22 located near the centerline CL. The center portion 22 is substantially flat in cross-section as illustrated in Figure 5. The tread 10 also has two shoulder portions 26,28. For ease of illustration, only shoulder portion 26 will be described hereafter, although the description of shoulder portion 26 is equally applicable to shoulder portion 28.

With reference to Figures 5 and 6, the shoulder portion 26 is characterized by two radii of curvature, a first radius of curvature R1 and a second radius of curvature R2.

The first radius of curvature R1 has a center along a line 32 parallel to the centerline CL of the precured tread 10 and placed a distance D1 therefrom. The first radius of curvature R1 it between 125% and 225% of a tread width of the tread 10. The distance D1 is between 10% and 25% of the tread width.

In the preferred embodiment, the tread width is equal to 8.712 inches (22,13 cm), D1 is equal to 1.421 inches (3,61 cm), and R1 is equal to 15.375 inches (39,05 cm).

The second radius of curvature R2 also has a center along a line parallel to the centerline CL of the precured tread 10 and is placed a distance D2 therefrom. The second radius of curvature R2 is between 5% and 20% of the tread width. The distance D2 is between 30% and 50% of the tread width. In the preferred embodiment, the tread width is 8.712 inches (22,13 cm), making D2 equal to 3.401 inches (8,64 cm) and R2 equal to 1.025 inches (2,60 cm).

Prior art designs, such as those illustrated in Figures 2,4 and 6, incorporated some of the features of the inventive design. For example, with reference to Figure 6, the prior art tread 40 included grooves 44 and a ground-engaging surface 46. The prior art tread 40 also included a radius analogous to R2 of the invention. This prior art radius, designated R3 in Figure 6, was smaller than R2 of the invention. For example, the tire illustrated in Figures 1, 3 and 5 is of comparable size and comparable application to that of Figures 2,4, and 6. As discussed above, R2 in the preferred embodiment is equal to 1.025 inches (2,60 cm) while R3 in the prior art is equal to 0.256 inches (0,65 cm).

More importantly, with reference to Figures 5 and 6, the prior art tread 40 does not feature any structure analogous to the first radius of curvature R1 of the invention. Instead, a cross-section of the ground-engaging surface 46 of the prior art tread 40 is essentially linear until it becomes radius R3. In the area designated 50 in Figure 6, no radius of curvature is present. With reference to Figure 5, this is the analogous area where the first radius of curvature R1 operates in the invention. In the prior art tire illustrated in Figures 2,4 and 6, scuffing commonly occurs in the area designated 50. In spread axle applications, scuffing commonly occurs in the area designated 50.

With reference to Figure 5, the modification in the tread profile generated by first radius of curvature R1 lowers the ground-engaging surface 18 in the shoulder portion 26 in the area analogous to area 50 of Figure 6. By moving the ground-engaging surface of the tread toward the tire's axis of rotation, scuffing is believed to be reduced or eliminated in spread axle applications.

While specific embodiments of the invention have been illustrated and described, it will be recognized that the invention variously modified may be practiced the invention variously modified may be practiced without departing from the scope of the claims.

## Claims

1. An intermediate article of manufacture having a precured tread **(10)** for heavy duty pneumatic truck tires, said precured tread **(10)** having a tread width and a centerline **(CL)**, a center portion **(22)** and two shoulder portions **(26**, **28)**, the tread being characterized in that at least one of said shoulder portions has a first radius of curvature R1, said first radius of curvature R1 having a center along a line **(32)** parallel to the centerline **(CL)** of the precured tread **(10)** and displaced a distance D1 therefrom, said first radius of curvature R1 being between 125% and 225% of said tread width, said distance D1 being between 10% and 25% of said tread width.

2. The intermediate article of manufacture of claim 1 wherein said one of said shoulder portions further is characterized by a second radius of curvature R2 having a center along a line parallel to the centerline **(CL)** of the precured tread **(10)** and displaced a distance D2 therefrom, said second radius of curvature R2 being between 5% and 20% of said tread width, said distance D2 being between 30% and 50% of said tread width.

3. The intermediate article of manufacture of claim 1 or 2 wherein said precured tread **(10)** is injection molded.

4. The intermediate article of manufacture of any of claims 1 to 3 wherein said precured tread **(10)** is capable of being applied to an associated tire casing **(60)** by cold capping.

5. The intermediate article of manufacture of any of claims 1 to 4 wherein said first radius of curvature R1 is between 12 inches (30,48 cm) and 20 inches (50,80 cm) and said distance D1 is between 1 inch (2,54 cm) and 2.25 inches (5,72 cm).

6. The intermediate article of manufacture of claim 5 wherein said one of said shoulder portions further is characterized by a second radius of curvature R2, said second radius of curvature R2 having a center along a line parallel to the tire's equatorial plane **(EP)** and displaced a distance D2 therefrom, said second radius of curvature R2 being between 0.5 inches and 2.0 inches (1,27 cm and 5,08 cm), said distance D2 being between 2.75 inches and 5.0 inches (6,99 cm and 12,70 cm).
